# EUROPEAN PATENT APPLICATION

(11) **EP 4 070 995 A1**
(43) Date of publication of application: **12.10.2022**
(21) Application number: 21167081.5
(22) Date of filing: 06.04.2021
(51) Int. Cl.: B60R 1/00, B60K 35/00, B60K 37/04, B60K 37/06

(54) **A CAB FOR A HEAVY-DUTY VEHICLE WHEREBY THE DISPLAY FUNCTION OF EACH SCREEN CAN BE MODIFIED AND CONTEXTUALIZED**

(71) Applicant: VOLVO TRUCK CORPORATION, 405 08 Göteborg (SE)
(72) Inventor: RIBERO, Raphaël, 69390 Millery (FR); QUIBRIAC, Yann, 69007 Lyon (FR)
(74) Representative: Plasseraud IP

(57) **Abstract**

The invention relates to a cab (4) for a heavy-duty vehicle (2), such as a bus or truck, whereby at least three display screens (6, 8, 10, 12, 14) are arranged inside the cab, each display screen having a display function, so that at least three different images, containing information for the driver, can be displayed, wherein all the screens are connected to one and the same communication network (24) so that any signal can be transmitted through the network to the display screens and, accordingly, the display function of each screen can be modified.

## Description

### TECHNICAL FIELD

The invention relates to the field of heavy-duty vehicles (also known as "industrial vehicles") designed for transportation. More precisely, the goal of the invention is to improve driver comfort and interaction with the vehicle.

The invention can be applied in heavy-duty vehicles, such as trucks or buses. Although the invention will be described with respect to a truck, the invention is not restricted to this particular vehicle, but may also be used in other vehicles such as buses.

### BACKGROUND

Nowadays, there are more and more display screens inside vehicles such as buses and trucks. Indeed, exterior mirrors are gradually being replaced by cameras to improve air penetration and therefore reduce fuel consumption as well as to improve direct visibility. Also, trucks usually have additional screens on the bunk side and on the dashboard area. Thus, it is expected that in the future trucks will be equipped with several display screens, including:
- One Driver Information Display (DID);
- One Secondary Information Display (SID)
- Two Camera Monitoring System (CMS) displays
- One Resting screen; and
- One Bunk control screen.

In practice, it is planned to have at least six screens inside the driver cab.

Trucks can be used in different ways: manual driving or autonomous driving and today, some screens display a predefined and fixed content regardless of the driving mode. Today, each screen has a dedicated display function. Typically, the DID behind the steering wheel is used exclusively to display information about vehicle status and driving conditions, such as check lights, speedometer, rev counter, fuel level, etc.

Also, the SID is usually used to display the road map (GPS). In a manner known per se, on modern cars, the SID can also be used to display the rear view of the vehicle through the rear view camera, automatically as soon as the driver engages reverse gear.

In this technical domain, EP 2 058 162 B1 discloses a multifunction display for a motor vehicle, comprising a display device which is coupled to a control unit. The control unit controls the graphic representation of information on a display surface of the display device.

US 105 625 42 discloses an autonomous vehicle, comprising a user interface to a passenger of the autonomous vehicle, a sensor system that is configured to output a sensor signal indicative of a condition of the autonomous vehicle and a computing system that is in communication with the sensor system and the user interface device. The autonomous vehicle may suddenly stop (e.g., due to an animal running in front of the autonomous vehicle or a vehicle in front of the autonomous vehicle coming to a sudden stop). The sensor systems output sensor signals that indicate the autonomous vehicle has suddenly stopped (e.g., rate of deceleration is above a threshold). The passenger support system determines that the event (the sudden stop) has occurred based upon the sensor signals and causes the display to present a pictorial support message. The support message can include pictures indicative of different scenarios, such as an injury or a passenger question.

In another example, the sensor system can output sensor signals that indicate that the autonomous vehicle has not moved for a relatively significant amount of time (e.g., three minutes). The passenger support system detects that the autonomous vehicle has not moved based upon the sensor signals and causes the display to present a pictorial support message in accordance with the profile of the passenger. For instance, the support message may include pictures indicating there was a car accident causing a delay, pictures indicating confusion, pictures indicating communicating with a support agent, and so forth.

The goal of US 105 625 42 is to relieve the passenger from manually enter a support request or attempt to read text displayed on the user interface device while the autonomous vehicle travels along the route.

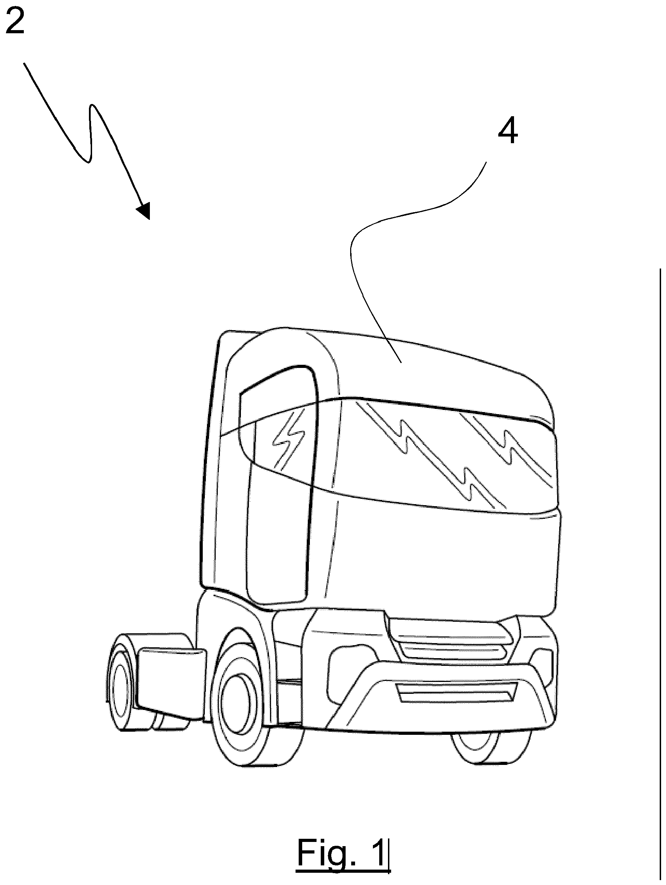

WO 2020 140 896 A1 discloses on Figure 1 one example of an interior view of a control environment of a vehicle. As shown in Figure 1, the control environment includes a dashboard screen running substantially from one side to the other side of a vehicle dashboard. The coast-to-coast dashboard screen can be a curved display (also referred to as SED) that substantially spans the width of the dashboard and that is integrated into the dashboard. One or more graphical user interfaces can be provided in a number of display areas such as display areas A 114, display area B 116, and display area C 118.

Such graphical user interfaces can include status menus shown in, e.g., display areas A 114 and display C 118. For one embodiment, display area A 114 can show driving-critical information, such as instrument clusters, and rear view or side view or surround view images of the vehicle from one or more cameras, radars, or other sensors located outside or inside of the vehicle. For one embodiment, display area B 116 and display area C 118 can display non-driving-critical information. For example, display area B 116 can display a map application 157; and display area C 118 can display entertainment settings with preferences for music, audiobooks, movies, and games.

None of the above-cited publications concerns an application to a heavy-duty vehicle such as a truck. Besides, prior art does not disclose to provide the driver with the possibility of controlling the display function of each one of the display screens inside the cab.

### SUMMARY

An object of the invention is to create a contextualized and personalized display (including an ON/OFF possibility) depending on the vehicle driving mode.

The object is achieved by a cab according to claim 1.

By the provision of a cab in which all display screens are connected to one and the same communication network any video signal can be transmitted through the network to the display screens and, accordingly, the display function of each screen can be modified. Typically, the display function of a display screen can be modified manually by the driver or can be automatically changed when switching to another driving mode, such as an autonomous driving mode. In this situation, display function is automatically changed depending on the context (contextualized).

Claims 2 to 7 define optional features of the cab.

The invention also concerns a method according to claim 8.

Claims 9 and 10 define optional features of the method.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a perspective view of a heavy-duty vehicle, typically a truck, comprising a cab according to the invention;
Fig. 2 to 4 are different perspective views of the interior of the cab; and
Fig. 5 is a scheme representing a communication network between all display screens of the cab.
Fig. 6 represents a top view of a truck, provided with the field of vision of the different cameras mounted on the truck.

### DETAILED DESCRIPTION OF EXAMPLE EMBODIMENTS OF THE INVENTION

Figure 1 shows a heavy-duty vehicle which, in the example, is a truck 2. In known manner truck 2 includes a chassis and a cab 4 which is arranged above the chassis. Usually, the cab is manufactured separately from the chassis and can therefore be sold independently.

Truck 2 typically includes an internal combustion engine (ICE), meaning that it is preferably a Thermal Vehicle or a Hybrid Electric Vehicle (HEV). However, it can also be a Battery Electric Vehicle (BEV) or a Fuel Cell Electric Vehicle (FECV).

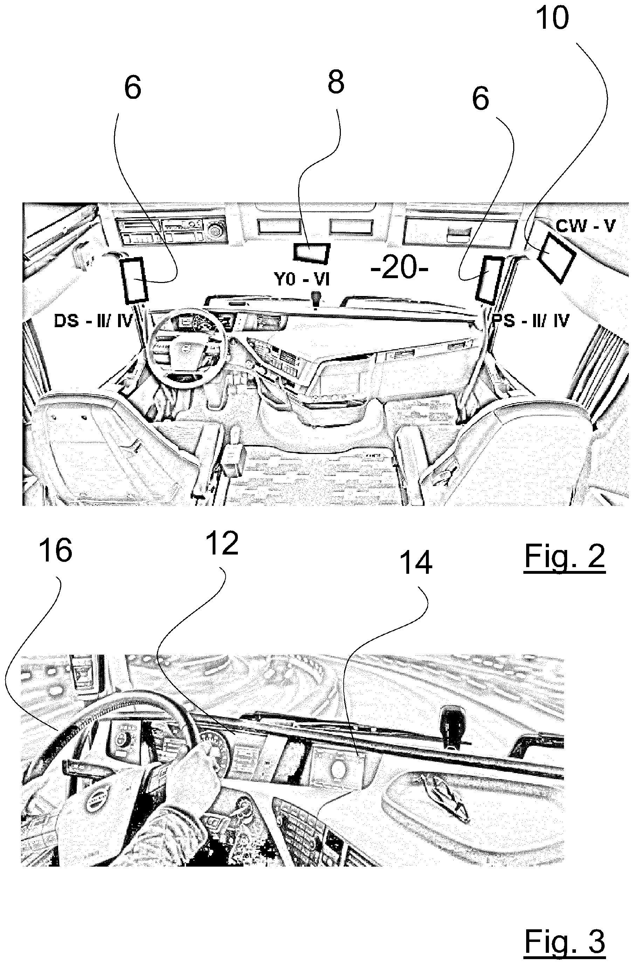

As shown on figures 2 and 3, several display screens are arranged inside the cab 4. Each display screen enables to display various information to the driver.

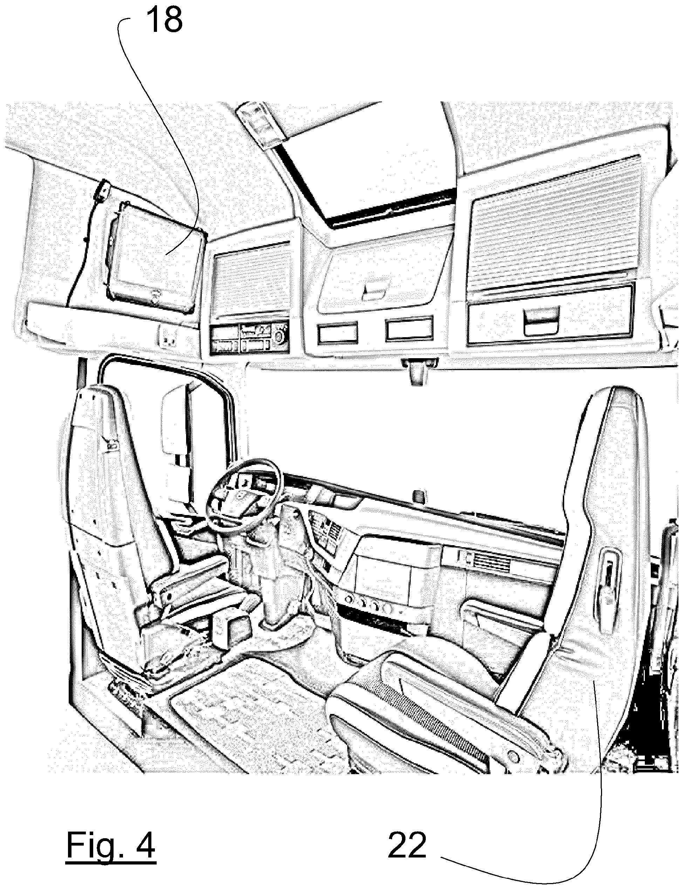

In the example, the cab 4 is provided with:
- One Driver Information Display (DID) 12;
- One Secondary Information Display (SID) 14;
- Two Camera Monitoring System (CMS) displays 6 (Left and Right);
- One Resting screen 18 (Cf. Figure 4); and
- One Bunk control screen (Not shown).

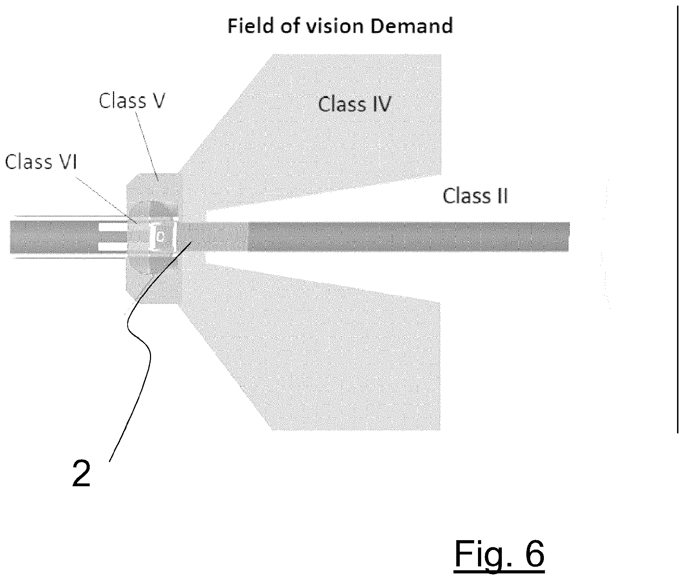

Fig. 6 represents a top view of truck 2. It shows the field of vision of the different cameras mounted on the truck. In compliance with the applicable regulation, Class II refers to a view behind the truck or trailer (if any). Class IV refers to a side view along the side edge of the truck or of the trailer (If any). Class V refers to a bird's eye view of the ground area just below the vehicle doors. Class VI refers to a bird's eye view of the ground area just in front of the cab 4.

Indeed, each one of the above-mentioned views (Class II, IV, V and VI) are views are not directly visible by the driver, that is why cameras are provided.

Preferably, Cab 4 also includes a screen 8 located just above the windshield, approximately in the center. Screen 8 is can be used to display images captured by a front camera, meaning that screen 8 provides a bird's eye view just in front of the cab (Class VI).

DID 12 is arranged behind steering wheel 16.

SID 14 is arranged on the dashboard, precisely on the right of the steering wheel 16, which makes it easily accessible to the driver with its right hand. SID 14 is approximately located to the center of the dashboard.

The CMS displays 6 are attached to the cab structure, in particular to the side beams that support the windshield 20. CMS displays 6 display the images captured by two respective side cameras (not shown) arranged outside of the cab 4. Basically, and as shown on Figure 1, these two side cameras replace traditional external mirrors.

In reference to figure 6, CMS displays 6 display views according to Class II and IV.

Preferably, the two side cameras (not shown) are connected to the on-board battery of the truck (which is usually a 24V Battery or a 12V Battery).

Resting screen 18 (also known as "TV screen") is arranged above driver door. The driver can watch resting screen 18 during a break, while sitting on passenger seat 22. Indeed, the driver sitting on passenger seat 22 can turn the seat 22 toward driver door and therefore watch TV or the like on resting screen 18.

Optionally, two additional screens 10 can be provided above driver door and passenger door in order to display class V and Class VI views. These two additional screens 10 can be used to display a downward view of the outside area just below the cab doors (Class V).

According to the invention, at least three display screens are arranged inside the cab 4. Each display screen has a display function, so that at least three different images, containing information for the driver, can be displayed.

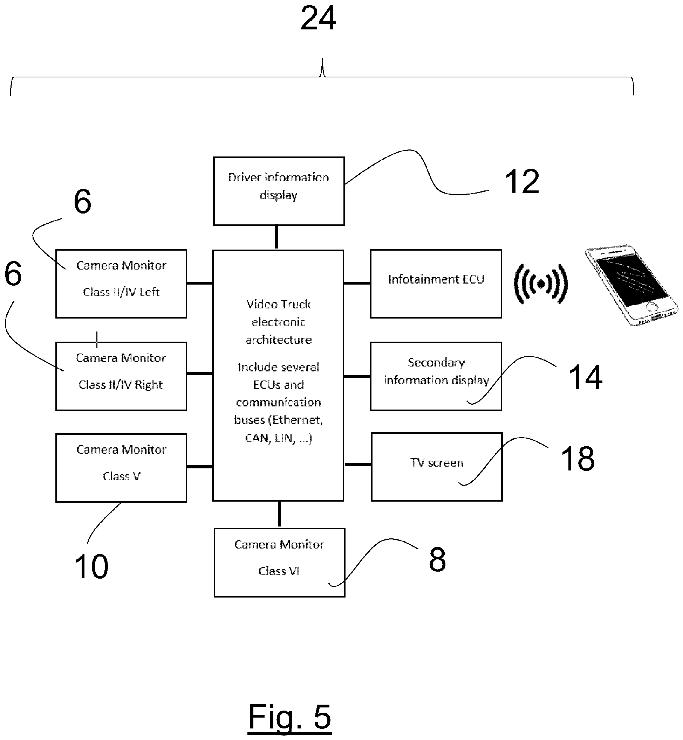

As shown on figure 5, all the screens are connected to one and the same communication network (or "on-board network") 24 so that any signal can be transmitted through network 24 to the display screens. The "communication network" 24 to which it is referred to above can also be known as the "Video truck electronic architecture". It includes several ECUs and communication buses (Ethernet, CAN, LIN, etc.).

Advantageously, the signal(s) transmitted to each one of the screens is or are video signal(s).

Accordingly, the display function of each screen can be changed/modified. This means that, considering that the cab is provided with 3 display screens (DID, SID and TV screen), any available material or content can be displayed on any one of the three display screens, in a flexible manner.

For instance, in manual driving mode, a first display screen can be assigned with a display function X, a second display screen can be assigned with a display function Y and a third display screen can be assigned with a display function Z. However, in autonomous driving mode or in parked mode (also known as "living mode"), the display function Z can be assigned to the first or second display screen, display function Y can be assigned to the first or third display screen and display function X can be assigned to the second or third display screen.

The autonomous driving mode to which it is referred to above is typically a mode that can be activated by the driver when moving on highways for example, to relieve driver action during a long haul journey. Accordingly, the driver can obviously take over and deactivate autonomous mode to get back to manual driving mode. In an alternative embodiment, the vehicle could be fully autonomous, i.e. capable of moving without driver control. However, the heavy-duty vehicle would still include a driver cab, the driver being solicited for other tasks than just driving, such loading/unloading the cargo.

According to another example, and given that the two side cameras are powered up by the truck battery, it is possible for the driver to display the side surroundings of the truck, i.e. the images captured by the two side cameras while engine is OFF. This can be particularly useful to check the vehicle surroundings in case of thief or intrusion suspicion. These images normally displayed on the surroundings view screens could be in the context of the invention be displayed in any other screen such as resting screen.

According to another example, the driver, when laying on the bank, can display some relevant vehicle information on bunk screen or on resting screen 18, such as GPS data, trip information, reservoir level, battery SOC and so on. This can be very comfortable for the driver, who does not have to stand up, turn the engine ON and watch at DID 12. Information that is by default displayed on DID 12 can e displayed on resting screen 18 and/or on bunk screen. This is one of the great advantages that are obtained with the system of the invention. This offers the possibility to display pop up information or alerts messages (e.g. tire pressure alerts) and ensure the right taken into account alerts by the driver, this information being critical for the mission to be executed.

Therefore, a screen is no more dedicated to a specific function, independently of the driving mode. As a result, the display function of one screen can be changed when switching to another driving mode. For instance, screens can be used to display different contents when driving in autonomous mode. This offers a new way to display information to the driver, independently of the original purpose of the screen Hardware (HW) functionality.

Accordingly, in certain modes of operation (or "driving modes"), such as autonomous driving or parked mode, the driver can modify/change the content displayed on the available screens.

For instance, the CMS display screens 6 are, by default, used to display the mirror view provided by the two lateral cameras. This mirror view visualization is submitted to a regulation when it comes to the angle of vision covered, image size, etc. (R48 regulation). However, autonomous driving mode offers a completely different angle of view outside the constraints of the R48 regulation. For instance, this view can be focused on the trailer visualization or can offer a panoramic wide-angle field of view for the driver comfort/vigilance.

It can also be envisaged to use these CMS screens 6, while in autonomous driving mode, for displaying the content of the cargo (i.e. the inside view of the trailer). This can be of a high interest if the cargo transports some animals. The images of the animals can be forbidden in manual driving mode in order to avoid the driver's distraction; but can be allowed/authorized in autonomous driving mode or parked mode in order to catch the driver's attention/keep an eye on the well-being of the animals in the cargo.

The CMS display screens 6 can also be used, if applicable, to monitor some gravels in a dumpster, a construction vehicle on a flatbed, etc.

More generally, today, the driver cannot pay attention at the cargo situation while driving. With the flexibility provided by the new cab 4 of the invention, it could be envisaged during phases where no driver action is needed, such as autonomous driving or parked driving phases, to allow the driver watching at the cargo. In other words, autonomous driving situation offers new perspectives, in which the driver is mentally available for other interests than pure driving and can therefore focus on something else, such as infotainment, cargo situation and so on.

Basically, the display function of any one of the display screens can be selected among the following:
- Vehicle information;
- Infotainment;
- Road map;
- Camera images;
- Telephone services,
- Body Builder Information (if any),
- etc

Vehicle information is usually displayed on DID 12. It includes information like fuel tank level, battery SOC, Air tanks level and so on.

Infotainment, road map and telephone services are usually displayed on SID 14.

Thanks to the invention, it is possible to display vehicle information on Resting display screen 18, CMS screens 6 or bunk display screen. Also, telephone services can be displayed on CMS screens 6 for instance.

All in all, it will be possible to interchange the display function of a screen A with than of a screen B, in a flexible manner.

In a context of the future autonomous driving phases, it can be envisaged to set up a system to allow fleet owners monitoring the cargo's content.

Although the invention has been defined up to now as concerning the display system of a cab (display screens), it can also be seen as a method for controlling the information displayed on the screens arranged inside the cab 4. Said method comprises steps consisting in:
a) Monitoring the occurrence of an event such as a driver manual request or a change of driving mode; and
b) When such event occurs, modifying the display function of at least one display screen.

For instance, the manual driver request can be a swiping motion on the display screen with the finger. To do that, each display screen of the cab 4 is preferably a touch screen. Obviously, manual driver request is allowed only if the vehicle is in parking mode, i.e. at standstill with parking brake engaged or only if the vehicle is moving in an autonomous driving mode. In other words, a request of the driver to change the display function of a display screen could be rejected while the vehicle is moving in a "normal" driving mode to comply with applicable regulation.

It is to be understood that the present invention is not limited to the embodiments described above and illustrated in the drawings; rather, the skilled person will recognize that many changes and modifications may be made within the scope of the appended claims.

## Claims

1. A cab (4) for a heavy-duty vehicle (2), such as a bus or truck, whereby at least three display screens (6, 8, 10, 12, 14) are arranged inside the cab, each display screen having a display function, so that at least three different images, containing information for the driver, can be displayed, wherein all the screens are connected to one and the same communication network (24) so that any signal can be transmitted through the network to the display screens and, accordingly, the display function of each screen can be modified.

2. The cab of claim 1, wherein the three display screens include two lateral screens (6) for displaying images captured by two side cameras.

3. The cab of claim 1 or 2, wherein the three display screens include one Driver Information Display screen (12) arranged behind the steering wheel (16) and/or one Secondary Information Display screen (14) in the centre of the dashboard.

4. The cab according to any previous claim, further including at least one of the following:
- a bunk display screen;
- a resting screen (18);
- two doors view display screens (10);
- a front view display screen (8).

5. The cab according to any previous claim, wherein the display function of any display screen can be selected among the following:
- Vehicle information;
- Infotainment;
- Road map;
- Camera images;
- Telephone services.
- Body builder information
- Etc...

6. The cab according to any previous claim, wherein the display function of any display screen can be manually modified by the driver.

7. The cab according to any previous claim, wherein the display function of one or more displays is modified automatically as a function of the driving mode of the vehicle, for example when the vehicle enters into an autonomous driving mode or a parked mode.

8. A method for controlling the information displayed on the screens arranged inside a cab according to any previous claim, said method comprising steps consisting in:
a) Monitoring the occurrence of an event such as a driver manual request or a change of driving mode;
b) When such event occurs, modifying the display function of at least one display screen.

9. The method according to previous claim, wherein the driving mode can be:
- An autonomous driving mode;
- A parked mode; or
- A manual driving mode.

10. The method according to claim 8 or 9, wherein the manual driver request consists in making a swiping motion on the display screen with the finger.
